# EUROPEAN PATENT SPECIFICATION

(11) **EP 2 368 941 B1**
(45) Date of publication and mention of the grant of the patent: **13.08.2014**
(21) Application number: 09834461.7
(22) Date of filing: 24.12.2009
(51) Int. Cl.: C08L 83/07, C08J 9/28, C08K 3/34, C08K 3/36, C08K 5/05, C08K 5/103, C08L 83/05, C08L 83/04

(54) **SILICONE RUBBER SPONGE-FORMING EMULSION COMPOSITION AND METHOD FOR MANUFACTURING SILICONE RUBBER SPONGE**
SILIKONSCHAUMGUMMI FORMENDE EMULSIONSZUSAMMENSETZUNG UND VERFAHREN ZUR HERSTELLUNG VON SILIKONSCHAUMGUMMI
COMPOSITION D'EMULSION DE FORMATION D'EPONGE DE CAOUTCHOUC DE SILICONE ET PROCEDE DE FABRICATION DE CETTE EPONGE

(30) Priority: 24.12.2008 JP 2008328754
(43) Date of publication of application: 28.09.2011
(73) Proprietor: Dow Corning Toray Co., Ltd., Tokyo, 100-0004 (JP)
(72) Inventor: TSUCHIYAMA, Kota, Awara-shi Fukui 919-0614 (JP); SHIRASAKI, Shinya, Awara-shi Fukui 919-0614 (JP); HAMADA, Mitsuo, Awara-shi Fukui 919-0614 (JP)
(74) Representative: Ede, Eric
(86) International application number: PCT/JP2009/007168
(87) International publication number: WO 2010/073654

(56) References cited:
- EP-A1- 1 724 308
- WO-A1-2004/104105
- JP-A- 2004 277 714
- JP-A- 2005 255 968
- JP-A- 2006 070 122
- JP-A- 2008 163 060
- JP-A- 2008 214 625

## Description

### Technical Field

The present invention relates to a silicone rubber sponge-forming emulsion composition and to a method of producing a silicone rubber sponge.

### Background Art

Silicone rubber sponge exhibits an excellent heat resistance and an excellent weathering resistance, is lightweight, and also has a low thermal conductivity and for these reasons is used as a component, element, or member of electrical equipment and devices and electronic equipment and devices and in construction and machinery.

Silicone rubber sponge is generally produced by heating a silicone rubber composition comprising a foaming agent, an organoperoxide, and a silicone rubber base comprising a diorganopolysiloxane gum and a reinforcing silica filler, or by heating a liquid silicone rubber composition comprising, for example, a liquid vinyl-containing diorganopolysiloxane, a reinforcing silica filler, an organohydrogenpolysiloxane, a silanol-containing organosiloxane, and a platinum-type catalyst.

JP 2004-346248 A and WO 2004/104105 teach methods of forming a silicone rubber or a porous silicone rubber, i.e., a silicone rubber sponge, by heating and thereby curing a silicone rubber-forming emulsion composition comprising a vinyl-functional diorganopolysiloxane, an organohydrogenpolysiloxane, a platinum-type catalyst, water containing a smectite clay, an emulsifying agent, and so forth, and thereafter removing the water, and describe the incorporation of a fumed silica or precipitated silica, which are reinforcing fillers, as a means for raising the strength of the silicone rubber sponge.

The incorporation of fumed silica or precipitated silica, which are reinforcing silica fillers, in a sponge-forming liquid silicone rubber composition is also described in JP 2008-214625 A. However, the present inventor noted that none of the preceding disclosures describe the co-use/co-incorporation of both a fumed silica and a precipitated silica and none teach that the emulsifiability or silicone rubber sponge strength is improved by such a co-use/co-incorporation.

EP 1 724 308 discloses a silicone rubber sponge emulsion composition comprising (A)(a) a liquid diorganopolysiloxane having at least two alkenyl groups per molecule, or a paste-like mixture of (a) a liquid diorganopolysiloxane having at least two alkenyl groups per molecule and (d) a reinforcing filler, (b) an organopolysiloxane having at least two silicon-bonded hydrogen atoms per molecule, and (c) a platinum catalyst, (B) an aqueous solution of a water-soluble polymer, and (C) an emulsifying agent; its production; and production of silicone rubber sponge, wherein silicone rubber sponge is obtained by curing the composition into a molding and heating the molding.

The incorporation of a reinforcing silica filler has generally been required in order to obtain a high-strength silicone rubber sponge from a silicone rubber sponge-forming emulsion composition. A problem with this has been that, as the quantity of incorporation of this reinforcing silica filler is increased, the silicone rubber sponge-forming emulsion composition becomes unstable with the specified emulsifying agents and it has not been possible to form a silicone rubber sponge with good-quality cells by curing such an emulsion composition and dewatering or drying. Another problem has been that the hardness of the silicone rubber sponge increases as the quantity of incorporation of the reinforcing silica filler increases, which has made it difficult to prepare a low-hardness silicone rubber sponge.

### [Prior Art Documents]

### [Patent Documents]

[Patent Document 1] JP 2004-346248 A
[Patent Document 2] WO 2004/104105
[Patent Document 3] JP 2008-214625 A

### Summary of the Invention

### Problems to Be Solved by the Invention

An object of the present invention is to provide a silicone rubber sponge-forming emulsion composition and a silicone rubber sponge production method that solve the problems identified above. In specific terms, an object of the present invention is to provide a silicone rubber sponge-forming emulsion composition that, even when the quantity of reinforcing silica filler incorporation is increased in order to raise the mechanical strength of the silicone rubber sponge, does not exhibit a decline in the emulsion stability of the emulsion composition, avoids defects in the cell morphology of the resulting silicone rubber sponge, and avoids a substantial increase in the hardness of the resulting silicone rubber sponge.

A further object of the present invention is to provide a method of producing from this emulsion composition a silicone rubber sponge that, even when the quantity of reinforcing silica filler incorporation is increased, is free of defects in cell morphology and does not exhibit a substantial increase in hardness.

### Means Solving the Problems

The preceding objects can be achieved by
"1. A silicone rubber sponge-forming emulsion composition characterized by comprising
   (A) 100 weight parts of a liquid diorganopolysiloxane that has at least two silicon-bonded alkenyl groups in each molecule,
   (B) 1 to 50 weight parts of a reinforcing silica filler comprising (b1) a fumed silica and (b2) a precipitated silica in a (b1)/(b2) weight ratio of 0.01/1 to 30/1,
   (C) 50 to 250 weight parts of water that contains (c) a smectite clay,
   (D) 0.1 to 7 weight parts of a sorbitan fatty acid ester,
   (E) 0 to 10 weight parts of an isononanoic acid ester,
   (F) 0 to 10 weight parts of a Guerbet alcohol, and
   (G) a curing agent in a quantity sufficient to crosslink and cure component (A).
2. The silicone rubber sponge-forming emulsion composition according to the aforementioned 1., characterized in that component (b1) is a hydrophobicized fumed silica and component (b2) is a hydrophobicized precipitated silica.
3. The silicone rubber sponge-forming emulsion composition according to the aforementioned 1. or 2., characterized in that component (C) contains 0.5 to 5 weight parts of (c) a smectite clay per 100 weight parts of the water.
4. The silicone rubber sponge-forming emulsion composition according to the aforementioned 1. or 2., characterized in that component (G) comprises (g1) an organopolysiloxane that has at least two silicon-bonded hydrogen atoms in each molecule and (g2) a platinum group catalyst.
5. The silicone rubber sponge-forming emulsion composition according to the aforementioned 1. or 2., characterized in that 100 weight parts component (A) and 1 to 50 weight parts of component (B) are incorporated in the form of a liquid silicone rubber base comprising (A) 100 weight parts of a liquid diorganopolysiloxane that has at least two silicon-bonded alkenyl groups in each molecule and (B) 1 to 50 weight parts of a reinforcing silica filler comprising (b1) a fumed silica and (b2) a precipitated silica in a (b1)/(b2) weight ratio of 0.01/1 to 30/1.
6. The silicone rubber sponge-forming emulsion composition according to the aforementioned 5., characterized in that component (C) contains 0.5 to 5 weight parts of (c) a smectite clay per 100 weight parts of the water.
7. The silicone rubber sponge-forming emulsion composition according to the aforementioned 5. or 6., characterized in that component (G) comprises (g1) an organopolysiloxane that has at least two silicon-bonded hydrogen atoms in each molecule and (g2) a platinum group catalyst.
8. The silicone rubber sponge-forming emulsion composition according to the aforementioned 1., 2., or 5., characterized in that (E) isononanoic acid ester is incorporated at 1 to 8 weight parts.
8-1. The silicone rubber sponge-forming emulsion composition according to the aforementioned 6. or 7., characterized in that (E) isononanoic acid ester is incorporated at 1 to 8 weight parts.
9. The silicone rubber sponge-forming emulsion composition according to the aforementioned 1., 2., 5., or 8., characterized in that (F) Guerbet alcohol is incorporated at 0.5 to 8 weight parts.
9-1. The silicone rubber sponge-forming emulsion composition according to the aforementioned 6., 7., or 8-1., characterized in that (F) Guerbet alcohol is incorporated at 0.5 to 8 weight parts.".

The preceding objects can also be achieved by
"10. A method of producing a silicone rubber sponge, characterized by producing a silicone rubber sponge by heating and thereby curing a silicone rubber sponge-forming emulsion composition according to any one of the aforementioned 1. to 4. while removing the water therefrom, or by heating and thereby curing a silicone rubber sponge-forming emulsion composition according to any one of the aforementioned 1. to 4. and then removing the water from the resulting wet silicone rubber-like cured product.
11. A method of producing a silicone rubber sponge, characterized by producing a silicone rubber sponge by heating and thereby curing a silicone rubber sponge-forming emulsion composition according to any one of the aforementioned 5. to 7. while removing the water therefrom, or by heating and thereby curing a silicone rubber sponge-forming emulsion composition according to any one of the aforementioned 5. to 7. and then removing the water from the resulting wet silicone rubber-like cured product.
12. A method of producing a silicone rubber sponge, characterized by producing a silicone rubber sponge by heating and thereby curing a silicone rubber sponge-forming emulsion composition according to the aforementioned 8. or 9. while removing the water therefrom, or by heating and thereby curing a silicone rubber sponge-forming emulsion composition according to the aforementioned 8. or 9. and then removing the water from the resulting wet silicone rubber-like cured product.".

### Effects of the Invention

Even when the quantity of reinforcing silica filler incorporation is increased in order to increase the mechanical strength of the silicone rubber sponge, the silicone rubber sponge-forming emulsion composition according to the present invention does not exhibit a decline in the emulsion stability of the emulsion composition, avoids defects in the cell morphology of the resulting continuous cell silicone rubber sponge, and avoids a substantial increase in the hardness of the resulting continuous cell silicone rubber sponge.

In addition, even when the quantity of reinforcing silica filler incorporation is increased, the silicone rubber sponge production method of the present invention can provide a continuous cell silicone rubber sponge that is free of defects in cell morphology and that does not exhibit a substantial increase in hardness. The obtained silicone rubber sponge exhibits an excellent mechanical strength while having continuous cells.

### Mode(s) for Carrying out the Invention

The silicone rubber sponge-forming emulsion composition of the present invention is characterized by comprising (A) 100 weight parts of a liquid diorganopolysiloxane that has at least two silicon-bonded alkenyl groups in each molecule, (B) 1 to 50 weight parts of a reinforcing silica filler comprising (b1) a fumed silica and (b2) a precipitated silica in a (b1)/(b2) weight ratio of 0.01/1 to 30/1, (C) 50 to 250 weight parts of water that contains (c) a smectite clay, (D) 0.1 to 7 weight parts of a sorbitan fatty acid ester, (E) 0 to 10 weight parts of an isononanoic acid ester, (F) 0 to 10 weight parts of a Guerbet alcohol, and (G) a curing agent in a quantity sufficient to crosslink and cure component (A).

The liquid diorganopolysiloxane (A) that has at least two alkenyl groups in each molecule forms a rubber upon crosslinking under the effect of the curing agent (G). When the curing agent comprises (g1) an organohydrogenpolysiloxane that has at least two silicon-bonded hydrogen atoms in each molecule and (g2) a platinum group catalyst, crosslinking and conversion into the rubber occur via an addition reaction between the alkenyl groups in component (A) and the silicon-bonded hydrogen atoms in component (g1).

The alkenyl group in the liquid diorganopolysiloxane (A) that has at least two alkenyl groups in each molecule can be exemplified by vinyl, allyl, propenyl, and hexenyl, wherein vinyl is preferred from the standpoint of the ease of production. The non-alkenyl organic groups can be exemplified by alkyl groups such as methyl, ethyl, propyl, hexyl, and so forth; aryl groups such as phenyl, tolyl, and so forth; and halogenated alkyl groups such as 3,3,3-trifluoropropyl, 3-chloropropyl, and so forth, wherein methyl is preferred from the standpoint of the ease of production. The molecular structure of this component may be straight chain or branch-containing straight chain.

The molecular weight of this component is not particularly limited as long as this component can be emulsified in component (C) by component (D). This component is a liquid at ambient temperature and preferably has a viscosity at 25°C of from 100 mPa · s to 100,000 mPa · s.

Component (A) can be exemplified by a dimethylpolysiloxane endblocked by dimethylvinylsiloxy groups at both terminals, a methylalkylpolysiloxane endblocked by dimethylvinylsiloxy groups at both terminals wherein the alkyl group has at least two carbons, a methylvinylpolysiloxane endblocked by dimethylvinylsiloxy groups at both terminals, a dimethylsiloxane · methylvinylsiloxane copolymer endblocked by dimethylvinylsiloxy groups at both terminals, a methylphenylpolysiloxane endblocked by dimethylvinylsiloxy groups at both terminals, a methyl(3,3,3-trifluoropropyl)polysiloxane endblocked by dimethylvinylsiloxy groups at both terminals, a methylvinylpolysiloxane endblocked by trimethylsiloxy groups at both terminals, a dimethylsiloxane · methylvinylpolysiloxane copolymer endblocked by trimethylsiloxy groups at both terminals, a methylvinylpolysiloxane endblocked by dimethylhydroxysiloxy groups at both terminals, a dimethylsiloxane · methylvinylsiloxane copolymer endblocked by dimethylhydroxysiloxy groups at both terminals, and a dimethylpolysiloxane endblocked by methyldivinylsiloxy groups or trivinylsiloxy groups at both terminals. This diorganopolysiloxane can be a combination of two or more diorganopolysiloxanes.

Component (G) is a curing agent for the liquid diorganopolysiloxane (A) that has at least two alkenyl groups in each molecule, and preferably comprises (g1) an organohydrogenpolysiloxane that has at least two silicon-bonded hydrogen atoms in each molecule and (g2) a platinum group catalyst.

Component (G) may also be an organoperoxide that has a thermal decomposition temperature of 50 to 100°C. When the organoperoxide has a thermal decomposition temperature in excess of 100°C, it is preferably used in combination with a component (g1) and component (g2). The organoperoxide under consideration can be exemplified by acyl-type peroxides such as benzoyl peroxide, bis(p-methylbenzoyl) peroxide, and so forth; alkyl-type peroxides such as 2,5-dimethyl-2,5-di(tert-butylperoxy)hexane, dicumyl peroxide, and so forth; as well as ester-type peroxides and carbonate-type peroxides.

The organohydrogenpolysiloxane (g1) that has at least two silicon-bonded hydrogen atoms in each molecule crosslinks and cures component (A) through an addition reaction by the silicon-bonded hydrogen atoms in (g1) to the silicon-bonded alkenyl groups in component (A) under the action of the (g2) platinum group catalyst.

When component (A) has two alkenyl groups in each molecule, component (g1) must then have at least three silicon-bonded hydrogen atoms.

The silicon-bonded organic groups in component (g1) can be exemplified by alkyl groups such as methyl, ethyl, propyl, hexyl, and so forth; aryl groups such as phenyl, tolyl, and so forth; and halogenated alkyl groups such as 3,3,3-trifluoropropyl, 3,3,5,5,5-pentafluorobutyl, 3-chloropropyl, and so forth, wherein the methyl group is preferred.

A methylhydrogenpolysiloxane is an example of a preferred component (g1). Specific examples are a methylhydrogenpolysiloxane endblocked by trimethylsiloxy groups at both molecular chain terminals, dimethylsiloxane · methylhydrogensiloxane copolymer endblocked by trimethylsiloxy groups at both molecular chain terminals, dimethylpolysiloxane endblocked by dimethylhydrogensiloxy groups at both molecular chain terminals, methylhydrogenpolysiloxane endblocked by dimethylhydrogensiloxy groups at both molecular chain terminals, dimethylsiloxane · methylhydrogensiloxane copolymer endblocked by dimethylhydrogensiloxy groups at both molecular chain terminals, cyclic methylhydrogenpolysiloxane, tetra(dimethylhydrogensiloxy)silane, and methyltri(dimethylhydrogensiloxy)silane.

The molecular structure of component (g1) may be straight chain, branched, cyclic, or network. The degree of polymerization of component (g1) should be at least 2 but is not otherwise particularly limited. Component (g1) is preferably a liquid at ambient temperature and preferably has a viscosity at 25°C of from 3 to 1,000 mPa · s.

Component (A) and component (g1) are incorporated in proportions that provide a molar ratio between the silicon-bonded hydrogen atoms in component (g1) and the silicon-bonded alkenyl groups in component (A) preferably from (0.5 : 1) to (20 : 1) and more preferably from (0.8 : 1) to (5 : 1). The reasons for this are as follows: obtaining a good curability becomes problematic when this molar ratio is less than 0.5; the cured product will exhibit an excessively high hardness when this molar ratio exceeds 20.

The platinum group catalyst (g2) is a catalyst of crosslinking and curing component (A) via the addition of the silicon-bonded hydrogen atoms in component (g1) to the silicon-bonded alkenyl groups in component (A). Examples of the platinum group catalyst (g2) are finely divided platinum, platinum black, chloroplatinic acid, olefin complexes of chloroplatinic acid, chloroplatinic acid/divinyltetramethyldisiloxane complexes, platinum complexes with divinyltetramethyldisiloxane, chloroplatinic acid/β-diketone complexes, platinum complexes with β-diketones, and microparticulated platinum catalysts comprising a previously listed platinum-type catalyst dispersed in a thermoplastic resin such as, for example, a silicone resin or polycarbonate resin; rhodium compounds; and palladium compounds. The aforementioned microparticulated platinum catalysts are preferred catalysts because they have an excellent storage stability in compositions.

Component (g2) is used in a so-called catalytic quantity, i.e., a quantity sufficient to bring about the crosslinking and curing of component (A) through the addition reaction of the silicon-bonded hydrogen atoms in component (g1) to the silicon-bonded alkenyl groups in component (A). In specific terms, it may be used at from 1 to 1,000 weight-ppm as the platinum group metal with reference to component (A).

The reinforcing silica filler (B), which comprises (b1) a fumed silica and (b2) a precipitated silica in a (b1)/(b2) weight ratio of 0.01/1 to 30/1, is incorporated because the silicone rubber sponge provided by the cure of just component (A) has an inadequate mechanical strength. This component (B) is an essential component for improving the mechanical strength of the silicone rubber sponge provided by curing. The emulsifiability in component (C) under the action of component (D) and particularly the emulsion stability are improved by the co-use of the fumed silica (b1) and precipitated silica (b2) and also by their co-use in a (b1)/(b2) weight ratio of 0.01/1 to 30/1. The (b1)/(b2) weight ratio is preferably 0.05/1 to 15/1 and more preferably is 0.1/1 to 10/1.

The quantity of incorporation for component (B) is 1 to 50 weight parts per 100 weight parts of component (A) and preferably 3 to 40 weight parts per 100 weight parts of component (A). The reasons for this are as follows: the mechanical strength of the silicone rubber sponge is unsatisfactory when component (B) is incorporated at less than 1 weight part; mixing into component (A) and emulsification in component (C) both become problematic at more than 50 weight parts.

The fumed silica (b1) is typically a fumed silica provided by subjecting fumed silica, which is hydrophilic, to a hydrophobing treatment with a silane-type, silazane-type, or siloxane-type hydrophobing agent. This hydrophobing agent can be exemplified by trimethylchlorosilane, dimethyldichlorosilane, hexamethyldisilazane, octamethylcyclotetrasiloxane, and low-viscosity diorganopolysiloxane endblocked by silanol groups at both terminals, for example, silanol-endblocked dimethylpolysiloxane, silanol-endblocked methylvinylpolysiloxane, and silanol-endblocked methylphenylpolysiloxane, in each case with a viscosity at 25°C of 10 to 100 mPa · s.

The hydrophobing treatment is generally performed during mixing of the fumed silica with component (A), but may be performed prior to mixing with component (A). When the hydrophobing treatment is carried out during mixing with component (A), the hydrophobing agent is preferably used in an amount sufficient to facilitate mixing of the fumed silica with component (A) and provide a uniform and fluid base.

The fumed silica (b1) is an ultramicroparticulate amorphous silica produced by the vaporization of silicon tetrachloride and its oxidation in a high-temperature oxyhydrogen flame, and it generally has a specific surface area by the BET method of from 100 to 400 m²/g. Its commercial products can be exemplified by AEROSIL 200 and AEROSIL 300 (from Nippon Aerosil Co., Ltd., AEROSIL is a registered trademark of Evonik-Degussa GmbH) and REOLOSIL (from Tokuyama Corporation, REOLOSIL is a registered trademark of Tokuyama Corporation).

The hydrophobed fumed silica suitably is provided by hydrophobing a fumed silica as described above and has a specific surface area by the BET method of from 100 to 350 m²/g. AEROSIL R972 and AEROSIL R974 (from Nippon Aerosil Co., Ltd.) are examples of commercially available hydrophobed silicas.

The precipitated silica (b2), also known as wet-method silica or wet-process silica, is a microparticulate silica micropowder obtained by a neutralization reaction in which a mineral acid, e.g., hydrochloric acid or sulfuric acid, is added to water glass, e.g., sodium silicate, followed by removal of the water and salt, and is hydrophilic due to the presence of adsorbed water and a large population of silanol groups.

Its specific surface area by the BET method is at least 30 m²/g and generally is 30 to 800 m²/g and preferably is 50 to 400 m²/g. Its average particle size is not more than 100 µm, generally from 0.1 to 100 µm, and preferably about 0.2 to 50 µm. Its commercial products can be exemplified by Nipsil (from Tosoh Silica Corporation, Nipsil is a registered trademark of Tosoh Silica Corporation), CARPLEX (from DSL. Japan Co., Ltd., CARPLEX is a registered trademark of DSL. Japan Co., Ltd.), and TOKUSIL (from the Tokuyama Corporation, TOKUSIL is a registered trademark of the Tokuyama Corporation).

Precipitated silica can be easily mixed with component (A) depending on the particular mixing conditions, but when subjected to a hydrophobing treatment with the previously described hydrophobing agent it can be easily mixed with component (A) under any mixing conditions. The hydrophobing treatment is generally performed during mixing with component (A), but may be performed prior to mixing with component (A).

The hydrophobing agent for this is preferably hexamethyldisilazane or a low-viscosity diorganopolysiloxane endblocked by the silanol group at both terminals, for example, silanol-endblocked dimethylpolysiloxane, silanol-endblocked methylvinylpolysiloxane, and silanol-endblocked methylphenylpolysiloxane, in each case with a viscosity at 25°C of 10 to 100 mPa · s. When the hydrophobing treatment is carried out during mixing with component (A), the hydrophobing agent is preferably used in an amount sufficient to facilitate mixing of the precipitated silica with component (A) and to provide a uniform and fluid base.

Component (B) is preferably converted in advance into a liquid silicone rubber base by mixing with component (A) because this results in facile emulsification and dispersion in component (C).

This liquid silicone rubber base is produced simply by introducing components (A) and (B) into a mixer and mixing to uniformity. This is preferably done by heating for 1 to 6 hours at a temperature in the range from 100°C to 250°C and preferably in the range from 150°C to 220°C. This heating may be performed under reduced pressure. The mixer is preferably a planetary stirrer in the case of batch production, while the production method described in JP S61-040327 A and JP 2002-241508 A is preferred in the case of continuous production.

A liquid silicone rubber base containing the fumed silica (b1) and precipitated silica (b2) may also be prepared by blending a liquid silicone rubber base produced by mixing component (A) and the fumed silica (b1) with a liquid silicone rubber base produced by mixing component (A) and the precipitated silica (b2). A hydrophobing agent as described above may be incorporated during production of the liquid silicone rubber base by mixing component (A) and the precipitated silica.

The following components may also be incorporated on an optional basis: a silicone resin, a silicone oil, carbon black, and/or a nonreinforcing filler such as a graphite powder, metal powder, metal oxide powder, metal hydroxide powder, and so forth.

Component (C), i.e., water containing the smectite clay (c), is a solute for emulsification of component (A). Component (C) increases the viscosity of the water-based emulsion. The smectite clay (c) in component (C) swells when dispersed in water and raises the viscosity of the water, resulting in the formation of a stable water-based emulsion even at low quantities of component (D) incorporation. When component (A) is emulsified in the water under the action of component (D), it is difficult to make a stable water-based emulsion when the smectite clay (c) has been incorporated. An important aspect is that the smectite clay (c)-containing water, i.e., an aqueous dispersion of the smectite clay, is a solute for component (A).

The smectite clay (c) in component (C) is preferably 0.5 to 5 weight% of the water and more preferably is 0.8 to 3 weight%. The reasons for this are as follows: at less than 0.5 weight%, component (C) has a low viscosity and it may then be difficult to obtain a stable emulsion; at above 5 weight%, component (C) has an excessively high viscosity and it then becomes difficult to emulsify component (A).

Any of the following can be used as the smectite clay (c) in component (C): natural smectite family clays such as bentonite, montmorillonite, hectorite, saponite, sauconite, beidellite, nontronite, and so forth; composites formed from a purified natural smectite family clay and an anionic polymer; and clays generally known as synthetic smectite family clays. The smectite clays undergo substantial swelling when dispersed in water, raising the viscosity of the water and forming a thixotropic system.

There are no limitations on the type of water in component (C) as long as the water is clean. The water in component (C) can be exemplified by tap water, well water, ion-exchanged water, and distilled water.

Component (C) is incorporated at from 50 to 250 weight parts per 100 weight parts component (A) and preferably at from 70 to 200 weight parts.

The sorbitan fatty acid ester (D) is incorporated in order to form a stable water-based emulsion when components (A) and (B) are emulsified dispersed in the water in component (C). Nonionic surfactants other than a sorbitan fatty acid ester are readily able to emulsify · disperse components (A) and (B) in component (C), but the silicone rubber sponge provided by curing then has poor mechanical characteristics. The sorbitan fatty acid ester can be exemplified by sorbitan monooleate, sorbitan sesquioleate, sorbitan dioleate, and sorbitan trioleate, and its HLB value is preferably not more than 5. Two or more of these emulsifying agents may be used in combination.

The quantity of component (D) incorporation can be substantially reduced due to the viscosity-increasing action of component (C) and is 0.1 to 7 weight parts and preferably 0.5 to 5 weight parts, in each case per 100 weight parts component (A). The reasons for this are as follows: the preparation of a stable water-based emulsion is quite problematic at less than 0.1 weight part; the mechanical characteristics of the silicone rubber sponge yielded by curing are impaired at more than 7 weight parts.

At increased levels of component (B) incorporation, the isononanoic acid ester (E) acts to promote the emulsification of components (A) and (B) in component (C) or the emulsification of the liquid silicone rubber base comprising components (A) and (B) in component (C). Because the silicone rubber sponge has a high mechanical strength as a result, as is seen by reference to Examples 5 and 6 in Table 1, the silicone rubber sponge-forming emulsion composition preferably contains component (E).

Component (E) can be exemplified by 2-ethylhexyl isononanoate, isononyl isononanoate, isodecyl isononanoate, and neopentyl glycol diisononanoate, wherein isononyl isononanoate is particularly preferred for its high compatibility with silicones.

The quantity of component (E) incorporation is 0 to 10 weight parts and preferably 1 to 8 weight parts, in each case per 100 weight parts component (A), and a suitable quantity should be incorporated in conformity with the quantity of component (B) incorporation, or the quantity of component (B) incorporation in the liquid silicone rubber base comprising components (A) and (B), and/or the viscosity of the liquid silicone rubber base. When component (E) exceeds 10 weight parts, the mechanical characteristics of the silicone rubber sponge yielded by curing and water removal are impaired, and 10 weight parts is therefore the upper limit.

The Guerbet alcohol (F) is a higher alcohol that has a 2-alkylalkanol structure and is obtained by the Guerbet reaction from an alcohol of plant origin. Due to its branched chain structure, the Guerbet alcohol (F) has a low solidification point, notwithstanding the fact that it is a saturated alcohol, and has an excellent color and odor and is resistant to oxidation.

The Guerbet alcohol acts to lower the hardness of the silicone rubber sponge after curing and dewatering of the water-based emulsion composition comprising components (A), (B), (C), (D), and (G) or the water-based emulsion composition comprising components (A), (B), (C), (D), (E), and (G).

Component (F) can be exemplified by hexyldecanol, isostearyl alcohol, 2-octyldecanol, and 2-decyltetradecanol, wherein hexyldecanol is particularly preferred for its high compatibility with silicones. The quantity of component (F) incorporation is 0 to 10 weight parts and preferably 0.5 to 8 weight parts, in each case per 100 weight parts component (A), and a suitable quantity should be incorporated in conformity with the quantity of component (B) incorporation, or the quantity of component (B) incorporation in the liquid silicone rubber base comprising components (A) and (B), and/or the viscosity of the liquid silicone rubber base. When component (F) exceeds 10 weight parts, the mechanical characteristics of the silicone rubber sponge yielded by curing and water removal are impaired, and 10 weight parts is therefore the upper limit.

The mixture of components (A), (g1), and (g2) is prone to undergo an addition reaction even at ambient temperature, and the further incorporation of an addition reaction inhibitor (H) is therefore preferred in order to prevent the development of the crosslinking reaction during emulsification or during storage of the emulsion.

The addition reaction inhibitor (H) can be exemplified by acetylenic alcohols, i.e., alkynyl alcohols, ene-yne compounds, benzotriazole, and tetramethyltetravinylcyclotetrasiloxane. The alkynyl alcohols can be specifically exemplified by 3-methyl-1-butyn-3-ol, 3,5-dimethyl-1-hexyn-3-ol, 3-methyl-1-pentyn-3-ol, phenylbutynol, and 1-ethynyl-1-cyclohexanol, while the ene-yne compounds can be specifically exemplified by 3-methyl-3-penten-1-yne and 3,5-dimethyl-1-hexyn-3-ene.

Component (H) is to be present in an amount that inhibits the addition reaction between components (A) and (g1) at ambient temperature, but which does not inhibit this addition reaction upon the application of heating. The preferred quantity of addition for the addition reaction inhibitor is generally 0.01 to 5 weight parts per 100 weight parts of the total of components (A) and (g1).

Otherwise, the silicone rubber sponge-forming emulsion composition of the present invention may also incorporate, for example, a heat stabilizer, adhesion promoter, antimicrobial, antimold, antiperspirant, humectant, pigment, and so forth.

The silicone rubber sponge-forming emulsion composition is a liquid at ambient temperature, and its viscosity range at 25°C, when measured at 2 rpm with a No. 6 rotor installed in a DVH-B4II rotary viscometer (Toki Sangyo Co., Ltd.), is preferably 3,000 to 30,000 mPa · s and more preferably is 5,000 to 20,000 mPa · s.

When component (G) comprises (g1) an organopolysiloxane that contains at least two silicon-bonded hydrogens in each molecule and (g2) a platinum group catalyst, the emulsion composition may take the form of a single-package, two-package, or three-package formulation.

The silicone rubber sponge-forming emulsion composition of the present invention may be packaged as a single-package system or two-package system or three-package system when component (G) comprises a component (g1) and a component (g2), and can preferably be produced by the following methods.

### (1) A single-package silicone rubber sponge-forming emulsion composition

This composition comprises at least components (A), (B), (C), (D), (g1), and (g2) and can be prepared by the following methods.
(1-1) Components (A), (B), (g1), (g2), (C), and (D) are stirred and mixed.
(1-2) Components (g1) and (g2) are stirred and mixed into a liquid silicone rubber base comprising components (A) and (B), followed by the addition of components (C) and (D) with stirring and mixing.
(1-3) Component (g1) is stirred and mixed into a liquid silicone rubber base comprising components (A) and (B); components (C) and (D) are subsequently added with stirring and mixing; and component (g2) is then added with stirring and mixing.

In each of the preceding production methods, a storage-stable composition is provided when component (H) is added. When the silicone rubber sponge-forming emulsion composition of the present invention contains component (E) or component (F) or both, component (E) or (F) or both are mixed along with component (g1) and/or component (g2). Or, component (E) or (F) or both are mixed along with component (C) and (D).

A single-package silicone rubber sponge-forming emulsion composition is produced in this way.

### (2) Two-package silicone rubber sponge-forming emulsion compositions

### (2-1) A composition comprising the following liquid A and liquid B

liquid A: an emulsion comprising components (g1), (C), and (D) and the liquid silicone rubber base comprising components (A) and (B).
liquid B: an emulsion comprising components (g2), (C), and (D) and the liquid silicone rubber base comprising components (A) and (B).

Production of the afore-mentioned composition:
Liquid A is prepared by mixing component (g1) into the liquid silicone rubber base comprising components (A) and (B) and then adding components (C) and (D) with stirring and mixing.
Liquid B is prepared by mixing component (g2) into the liquid silicone rubber base comprising components (A) and (B) and then adding components (C) and (D) with stirring and mixing.

### (2-2) A composition comprising the following liquid A and liquid B

liquid A: an emulsion comprising components (g2), (C), and (D) and the liquid silicone rubber base comprising components (A) and (B).
liquid B: component (g1).

Production of the afore-mentioned composition:
Liquid A is prepared by mixing component (g2) into the liquid silicone rubber base comprising components (A) and (B) and then adding components (C) and (D) with stirring and mixing.

The component (g1) is used as liquid B.

In each of the production methods described above, a storage-stable composition is obtained for the mixture of liquids A and B when component (H) is added.

When the silicone rubber sponge-forming emulsion composition of the present invention contains component (E) or component (F) or both, component (E) or (F) or both are then mixed along with component (g1) or component (g2). Or, component (E) or (F) or both are mixed along with component (C) and (D).

A two-package silicone rubber sponge-forming emulsion composition is produced proceeding in this way.

The silicone rubber sponge-forming emulsion composition of the present invention is generated by the mixing of liquids A and B during production of the silicone rubber sponge.

### (3) Three-package silicone rubber sponge-forming emulsion compositions

### (3-1) A composition comprising the following liquid A, liquid B, and liquid C

liquid A: a liquid mixture comprising components (g1) and (D) and the liquid silicone rubber base comprising components (A) and (B).
liquid B: a liquid mixture comprising components (g2) and (D) and the liquid silicone rubber base comprising components (A) and (B).
liquid C: component (C).

Production of the afore-mentioned composition:
Liquid A is prepared by mixing component (g1) into the liquid silicone rubber base comprising components (A) and (B) and then adding component (D) with stirring and mixing.
Liquid B is prepared by mixing component (g2) into the liquid silicone rubber base comprising components (A) and (B) and then adding component (D) with stirring and mixing.
Liquid C is component (C).

A storage-stable composition is obtained for the mixture of liquids A, B, and C through the addition of component (H) during the production of liquid A or liquid B.

When the silicone rubber sponge-forming emulsion composition of the present invention contains component (E) or component (F) or both, component (E) or (F) or both are then mixed along with component (g1) or component (g2). Or, component (E) or (F) or both are mixed along with component (D). Or, component (E) or (F) or both are mixed into component (C).

### (3-2) A composition comprising the following liquid A, liquid B, and liquid C

liquid A: a mixture comprising component (g1) and the liquid silicone rubber base comprising components (A) and (B).
liquid B: a mixture comprising component (g2) and the liquid silicone rubber base comprising components (A) and (B).
liquid C: a liquid comprising components (C) and (D).

Production of the afore-mentioned composition:
Liquid A is prepared by adding component (g1) to the liquid silicone rubber base comprising components (A) and (B) with stirring and mixing.
Liquid B is prepared by adding component (g2) to the liquid silicone rubber base comprising components (A) and (B) with stirring and mixing.
Liquid C is prepared by adding component (D) to component (C) with stirring and mixing.

A storage-stable composition is obtained for the mixture of liquids A, B, and C through the addition of component (H) during the production of liquid A or liquid B.

When the silicone rubber sponge-forming emulsion composition of the present invention contains component (E) or component (F) or both, component (E) or (F) or both are then mixed along with component (g1) or component (g2). Or, component (E) or (F) or both are mixed into components (C) and (D).

A three-package silicone rubber sponge-forming emulsion composition is produced in this way.

The silicone rubber sponge-forming emulsion composition of the present invention is generated by the mixing of liquids A, B, and C during production of the silicone rubber sponge.

The mixer used for emulsification in the production methods described above is preferably a high-shear mixer that has blades that rotate at high rates and can be exemplified by homomixers, homogenizers, line mixers, colloid mills, and planetary-type stirring/degassing devices.

This silicone rubber sponge-forming emulsion composition, when gas bubbles have been incorporated therein during mixing of the individual components, is preferably cured and molded after degassing.

To produce a silicone rubber sponge from the silicone rubber sponge-forming emulsion composition of the present invention, the emulsion composition under consideration is introduced into a mold, for example, a plastic mold, a compression molding mold, an injection molding mold, and so forth; curing is carried out at from ambient temperature to 100°C and preferably at from 70 to 90°C to form a wet silicone rubber-like cured material; and the water is then removed from this wet silicone rubber-like cured material by heating at 80 to 250°C.

Otherwise, the degassed silicone rubber sponge-forming emulsion may be coated on any of various substrates, for example, metal plate or board, synthetic resin plate or board, plastic sheet, and so forth, or may be extruded as such; immersion may then be carried out in water or hot water at from ambient temperature to 90°C to induce curing and form a wet silicone rubber-like cured material; and a silicone rubber sponge in film, bar, or rod form may then be produced by removing the water from the wet silicone rubber-like cured material by heating at 80 to 250°C. In addition, silicone rubber sponge can be formed at the surface region of a fibrous structure by coating on a fibrous structure, for example, a woven fabric, knit fabric, nonwoven fabric, artificial leather, and so forth, followed by dry heating at 70 to 90°C in an open system.

### Examples

The present invention is specifically described below through examples and comparative examples. Parts in the examples denote weight parts and % denotes weight%; the viscosity is the value measured at 25°C.

The emulsified state of the silicone rubber-forming emulsion composition and the mechanical properties after this emulsion composition had been cured, dewatered, and dried were evaluated and measured using the following conditions.

Emulsified state: the status of the emulsion was visually evaluated immediately after and 3 days after the production of the silicone rubber-forming emulsion. At immediately after emulsification, a good emulsifiability was indicated as "good" and a deficient emulsifiability was indicated as "no good ". After 3 days, an emulsion that did not undergo separation was indicated as "stable".

Mechanical properties: The hardness, strength, and elongation were measured based on JIS K6251. The hardness was measured using an Asker C hardness meter, and the silicone rubber sponge sheet used for the measurement had a thickness of 6 mm. In the case of the density, the length and width of a 6 mm x 6 mm x 6 mm silicone rubber sponge sheet was measured using slide calipers; the thickness was measured using a film thickness meter; the weight was measured with an electronic scale; and the density was calculated using density = weight/(length x width x thickness).

The following components were used in the examples and comparative examples.
A: a dimethylpolysiloxane endblocked by dimethylvinylsiloxy groups at both molecular chain terminals and having a viscosity of 10,000 mPa · s and a vinyl group content of 0.14%
g1: a dimethylsiloxane · methylhydrogensiloxane copolymer endblocked by trimethylsiloxy groups at both molecular chain terminals and having a silicon-bonded hydrogen content of 0.8%
g2: a chloroplatinic acid/divinyltetramethyldisiloxane complex
H: 3,5-dimethyl-1-hexyn-3-ol
C: an aqueous solution of BEN-GEL W-100U containing 2% BEN-GEL W-100U (Ben-Gel W-100U is the composite of a purified bentonite with an anionic polymer, from Hojun Co., Ltd.)
D: IONET S-80 (Ionet S-80 is a sorbitan monooleate from Sanyo Chemical Industries, Ltd.; IONET is a registered trademark of Sanyo Chemical Industries, Ltd.)
E: KAK99 (KAK99 is an isononyl nonanoate from Kokyu Alcohol Kogyo Co., Ltd.)
F: RISONOL 16SP (RISONOL 16SP is a hexyldecanol from Kokyu Alcohol Kogyo Co., Ltd.; RISONOL is a registered trademark of Kokyu Alcohol Kogyo Co., Ltd.)

[The liquid silicone rubber bases used in the examples and comparative examples]
AB-1: a flowable liquid silicone rubber base prepared in a mixer by mixing the following to uniformity and heating for 2 hours at 200°C under reduced pressure while kneading: 100 parts of (A) a dimethylpolysiloxane endblocked by dimethylvinylsiloxy groups at both molecular chain terminals and having a viscosity of 10,000 mPa · s and a vinyl group content of 0.14%, 40 parts of (b1) a fumed silica having a BET specific surface area of 225 m²/g, 7 parts hexamethyldisilazane, and 2 parts water
AB-2: a flowable liquid silicone rubber base prepared in a mixer by mixing the following to uniformity and heating for 2 hours at 200°C while kneading: 100 parts of (A) a dimethylpolysiloxane endblocked by dimethylvinylsiloxy groups at both molecular chain terminals and having a viscosity of 10,000 mPa · s and a vinyl group content of 0.14%, 2 parts of a dimethylpolysiloxane endblocked by silanol groups at both terminals and having a viscosity of 50 mPa · s, and 33 parts of (b2) a precipitated silica having a specific surface area of 210 m²/g

### [Emulsification method and emulsification conditions in the examples and comparative examples]

The previously described AB-1, AB-2, g1, H, C, D, E, and F were manually mixed and were then emulsified using the following 3-stage procedure and using a MAZERUSTAR model KK-100 (from Kurabo Industries Ltd., MAZERUSTAR is a registered trademark of Kurabo Industries Ltd.), a planetary stirring and degassing device. E and F were not used in all the examples. first step: approximately 1340 rpm orbital motion, no rotation, 60 seconds second step: approximately 1340 rpm orbital motion, approximately 1340 rpm rotation, 120 seconds third step: approximately 980 rpm orbital motion, approximately 670 rpm rotation, 60 seconds

### Examples 1 to 7

Table 1 reports the mixing proportions for each of the components A, b1, b2, g1, H, C, D, E, and F in the silicone rubber sponge-forming emulsion compositions prepared using the emulsification method and emulsification conditions given above.

The fumed silica (b1)/precipitated silica (b2) incorporation proportion was calculated from the blending ratio between AB-1 and AB-2.

0.015 part of component g2 was mixed by hand to uniformity into 100 parts of the silicone rubber sponge-forming emulsion composition; degassing was performed with a vacuum pump; casting into a 2 mm-thick mold was then carried out; and curing was performed for 10 minutes at 80°C to obtain a wet silicone rubber-like molded sheet. This molded sheet was introduced into a 120°C convection oven and was dried over 3 hours to obtain a continuous cell silicone rubber sponge sheet. The density, hardness, tensile strength, elongation, and cell diameter were measured on this silicone rubber sponge and are given in Table 1.

### Comparative Examples 1 to 3

The production of silicone rubber sponge-forming emulsion compositions was attempted using the emulsification method and emulsification conditions described above, but in all instances emulsification proved problematic and a silicone rubber sponge could not be fabricated. The mixing proportions for each of components A, b1, b2, g1, H, C, and D are given in Table 1, and the compounding ratio of fumed silica (b1)/precipitated silica (b2) was calculated from the blending ratio between AB-1 and AB-2.

**Table 1.**

| component | Ex. 1 | Ex. 2 | Ex. 3 | Ex. 4 | Ex. 5 | Ex. 6 | Ex. 7 | Comp. Ex. 1 | Comp. Ex. 2 | Comp. Ex. 3 |
|---|---|---|---|---|---|---|---|---|---|---|
| A | 100 | 100 | 100 | 100 | 100 | 100 | 100 | 100 | 100 | 100 |
| b1 | 1.6 | 11.3 | 6.4 | 6.4 | 10.2 | 10.6 | 6.1 | 6 | 9.4 | |
| b2 | 9.7 | 1.4 | 5.6 | 5.6 | 8.8 | 12.1 | 0.5 | | | 8 |
| g1 | 2.42 | 2.42 | 2.42 | 2.42 | 2.42 | 2.42 | 2.42 | 2.42 | 2.42 | 2.42 |
| H | 0.04 | 0.04 | 0.04 | 0.04 | 0.04 | 0.04 | 0.04 | 0.04 | 0.04 | 0.04 |
| C | 100 | 100 | 100 | 100 | 100 | 100 | 100 | 100 | 100 | 100 |
| D | 2.5 | 2.5 | 2.5 | 2.5 | 2.5 | 3 | 2.5 | 2.5 | 2.5 | 2.5 |
| E | | | | | 3 | 3 | | | | |
| F | | | | 1.5 | | | | | | |
| b1/b2 | 0.16 | 8.07 | 1.14 | 1.14 | 1.16 | 0.88 | 12.2 | | | |
| immediately after emulsification | good | good | good | good | good | good | good | no good | no good | no good |
| 3 days after emulsification | stable | stable | stable | stable | stable | stable | stable | | | |
| hardness | 24 | 26 | 27 | 20 | 25 | 35 | 15 | - | - | - |
| tensile strength (MPa) | 0.52 | 0.43 | 0.8 | 0.8 | 1.65 | 1.72 | 0.25 | - | - | - |
| elongation (%) | 180 | 262 | 430 | 450 | 480 | 420 | 150 | - | - | - |
| density (g/cm³) | 0.61 | 0.61 | 0.6 | 0.6 | 0.65 | 0.68 | 0.58 | - | - | - |
| cell diameter (µm) | 10-50 | 10-50 | 10-50 | 10-50 | 10-50 | 10-50 | 10-50 | - | - | - |

The preceding results demonstrate that the co-use of fumed silica with precipitated silica achieves major effects on the emulsifiability, emulsion stability, and mechanical properties of the silicone rubber sponge.

### Industrial Applicability

The silicone rubber sponge-forming emulsion composition of the present invention is useful for the production of a continuous cell silicone rubber sponge.

The method of the present invention for producing a silicone rubber sponge is useful for producing a continuous cell silicone rubber sponge.

## Claims

1. A silicone rubber sponge-forming emulsion composition **characterized by** comprising
(A) 100 weight parts of a liquid diorganopolysiloxane that has at least two silicon-bonded alkenyl groups in each molecule,
(B) 1 to 50 weight parts of a reinforcing silica filler comprising (b1) a fumed silica and (b2) a precipitated silica in a (b1)/(b2) weight ratio of 0.01/1 to 30/1,
(C) 50 to 250 weight parts of water that contains (c) a smectite clay,
(D) 0.1 to 7 weight parts of a sorbitan fatty acid ester,
(E) 0 to 10 weight parts of an isononanoic acid ester,
(F) 0 to 10 weight parts of a Guerbet alcohol, and
(G) a curing agent in a quantity sufficient to crosslink and cure component (A).

2. The silicone rubber sponge-forming emulsion composition according to claim 1, **characterized in that** component (b1) is a hydrophobicized fumed silica and component (b2) is a hydrophobicized precipitated silica.

3. The silicone rubber sponge-forming emulsion composition according to claim 1 or 2, **characterized in that** component (C) contains 0.5 to 5 weight parts of (c) a smectite clay per 100 weight parts of the water.

4. The silicone rubber sponge-forming emulsion composition according to claim 1 or 2, **characterized in that** component (G) comprises (g1) an organopolysiloxane that has at least two silicon-bonded hydrogen atoms in each molecule and (g2) a platinum group catalyst.

5. The silicone rubber sponge-forming emulsion composition according to claim 1 or 2, **characterized in that** 100 weight parts of component (A) and 1 to 50 weight parts of component (B) are incorporated in the form of a liquid silicone rubber base comprising (A) 100 weight parts of a liquid diorganopolysiloxane that has at least two silicon-bonded alkenyl groups in each molecule and (B) 1 to 50 weight parts of a reinforcing silica filler comprising (b1) a fumed silica and (b2) a precipitated silica in a (b1)/(b2) weight ratio of 0.01/1 to 30/1.

6. The silicone rubber sponge-forming emulsion composition according to claim 5, **characterized in that** the liquid silicone rubber base is prepared by blending a liquid silicone rubber base produced by mixing component (A) and the fumed silica (b1) with a silicone rubber base produced by mixing component (A) and the precipitated silica (b2)

7. The silicone rubber sponge forming emulsion composition according to claim 5, **characterized in that** component (C) contains 0.5 to 5 weight parts of (c) a smectite clay per 100 weight parts of the water.

8. The silicone rubber sponge-forming emulsion composition according to claim 5 or 7, **characterized in that** component (G) comprises (g1) an organopolysiloxane that has at least two silicon-bonded hydrogen atoms in each molecule and (g2) a platinum group catalyst.

9. The silicone rubber sponge-forming emulsion composition according to claim 1, 2, or 5, **characterized in that** (E) isononanoic acid ester is incorporated at 1 to 8 weight parts.

10. The silicone rubber sponge-forming emulsion composition according to claim 1, 2, 5, or 9, **characterized in that** (F) Guerbet alcohol is incorporated at 0.5 to 8 weight parts.

11. A method of producing a silicone rubber sponge, **characterized by** producing a silicone rubber sponge by heating and thereby curing a silicone rubber sponge-forming emulsion composition according to any one of claims 1 to 10 while removing the water therefrom, or by heating and thereby curing a silicone rubber sponge-forming emulsion composition according to any one of claims 1 to 10 and then removing the water from the resulting wet silicone rubber-like cured product.

## Patentansprüche

1. Silikongummischwammbildende Emulsionszusammensetzung, **gekennzeichnet dadurch, dass** sie umfasst
(A) 100 Gewichtsteile eines flüssigen Diorganopolysiloxans, das mindestens zwei siliziumgebundene Alkenylgruppen in jedem Molekül aufweist,
(B) 1 bis 50 Gewichtsteile eines verstärkenden Siliziumdioxidfüllstoffs, umfassend (b1) eine pyrogene Kieselsäure und (b2) ein ausgefälltes Siliziumdioxid in einem (b1):(b2)-Gewichtsverhältnis von 0,01:1 bis 30:1,
(C) 50 bis 250 Gewichtsteile Wasser, das (c) eine Smectit-Tonerde enthält,
(D) 0,1 bis 7 Gewichtsteile eines Sorbitan-Fettsäureesters,
(E) 0 bis 10 Gewichtsteile eines Isononansäureesters,
(F) 0 bis 10 Gewichtsteile eines Guerbetalkohols, und
(G) ein Härtungsmittel in einer Menge, die ausreicht, um Komponente (A) zu vernetzen und zu härten.

2. Silikongummischwammbildende Emulsionszusammensetzung nach Anspruch 1, **dadurch gekennzeichnet, dass** Komponente (b1) eine hydrophobisierte pyrogene Kieselsäure ist und Komponente (b2) ein hydrophobisiertes ausgefälltes Siliziumdioxid ist.

3. Silikongummischwammbildende Emulsionszusammensetzung nach Anspruch 1 oder 2, **dadurch gekennzeichnet, dass** Komponente (C) 0,5 bis 5 Gewichtsteile einer (c) Smectit-Tonerde pro 100 Gewichtsteile des Wassers enthält.

4. Silikongummischwammbildende Emulsionszusammensetzung nach Anspruch 1 oder 2, **dadurch gekennzeichnet, dass** Komponente (G) (g1) ein Organopolysiloxan, das mindestens zwei siliziumgebundene Wasserstoffatome in jedem Molekül aufweist, und (g2) einen Platingruppenkatalysator umfasst.

5. Silikongummischwammbildende Emulsionszusammensetzung nach Anspruch 1 oder 2, **dadurch gekennzeichnet, dass** 100 Gewichtsteile der Komponente (A) und 1 bis 50 Gewichtsteile der Komponente (B) in Form einer flüssigen Silikongummibasis eingebaut sind, umfassend (A) 100 Gewichtsteile eines flüssigen Diorganopolysiloxans, das mindestens zwei siliziumgebundene Alkenylgruppen in jedem Molekül aufweist, und (B) 1 bis 50 Gewichtsteile eines verstärkenden Siliziumdioxidfüllstoffs, umfassend (b1) eine pyrogene Kieselsäure und (b2) ein ausgefälltes Siliziumdioxid in einem (b1):(b2)-Gewichtsverhältnis von 0,01:1 bis 30:1.

6. Silikongummischwammbildende Emulsionszusammensetzung nach Anspruch 5, **dadurch gekennzeichnet, dass** die flüssige Silikongummibasis hergestellt wird, indem eine flüssige Silikongummibasis, die durch Mischen von Komponente (A) und der pyrogenen Kieselsäure (b1) produziert wurde, mit einer Silikongummibasis gemischt wird, die durch Mischen von Komponente (A) und dem ausgefällten Siliziumdioxid (b2) produziert wurde

7. Silikongummischwammbildende Emulsionszusammensetzung nach Anspruch 5, **dadurch gekennzeichnet, dass** Komponente (C) 0,5 bis 5 Gewichtsteile einer (c) Smectit-Tonerde pro 100 Gewichtsteile des Wassers enthält.

8. Silikongummischwammbildende Emulsionszusammensetzung nach Anspruch 5 oder 7, **dadurch gekennzeichnet, dass** Komponente (G) (g1) ein Organopolysiloxan, das mindestens zwei siliziumgebundene Wasserstoffatome in jedem Molekül aufweist, und (g2) einen Platingruppenkatalysator umfasst.

9. Silikongummischwammbildende Emulsionszusammensetzung nach Anspruch 1, 2 oder 5, **dadurch gekennzeichnet, dass** (E) Isononansäureester in 1 bis 8 Gewichtsteilen eingebaut ist.

10. Silikongummischwammbildende Emulsionszusammensetzung nach Anspruch 1, 2, 5 oder 9, **dadurch gekennzeichnet, dass** (F) Guerbetalkohol in 0,5 bis 8 Gewichtsteilen eingebaut ist.

11. Verfahren zum Herstellen eines Silikongummischwamms, **gekennzeichnet durch** Produzieren eines Silikongummischwamms, indem eine silikongummischwammbildende Emulsionszusammensetzung nach einem der Ansprüche 1 bis 10 erwärmt und **dadurch** gehärtet wird, während gleichzeitig das Wasser daraus entfernt wird, oder indem eine silikongummischwammbildende Emulsionszusammensetzung nach einem der Ansprüche 1 bis 10 erwärmt und **dadurch** gehärtet und das Wasser anschließend aus dem entstandenen wasserhaltigen silikongummiähnlichen gehärteten Produkt entfernt wird.

## Revendications

1. Composition de type émulsion formant une éponge de caoutchouc de silicone, **caractérisée en ce qu'**elle comprend
(A) 100 parties en poids d'un diorganopolysiloxane liquide qui possède au moins deux groupes alcényle liés à du silicium dans chaque molécule,
(B) 1 à 50 parties en poids d'une charge de silice de renforcement comprenant (b1) une silice fumée et (b2) une silice précipitée dans un rapport pondéral (b1)/(b2) de 0,01/1 à 30/1,
(C) 50 à 250 parties en poids d'eau qui contient (c) une argile smectique,
(D) 0,1 à 7 parties en poids d'un ester d'acide gras de sorbitan,
(E) 0 à 10 parties en poids d'un ester d'acide isononanoïque,
(F) 0 à 10 parties en poids d'un alcool de Guerbet, et
(G) un agent de durcissement en une quantité suffisante pour réticuler et durcir le composant (A).

2. Composition de type émulsion formant une éponge de caoutchouc de silicone selon la revendication 1, **caractérisée en ce que** le composant (b1) est une silice fumée rendue hydrophobe et le composant (b2) est une silice précipitée rendue hydrophobe.

3. Composition de type émulsion formant une éponge de caoutchouc de silicone selon la revendication 1 ou 2, **caractérisée en ce que** le composant (C) contient 0,5 à 5 parties en poids de (c) une argile smectique par 100 parties en poids de l'eau.

4. Composition de type émulsion formant une éponge de caoutchouc de silicone selon la revendication 1 ou 2, **caractérisée en ce que** le composant (G) comprend (g1) un organopolysiloxane qui possède au moins deux atomes d'hydrogène liés au silicium dans chaque molécule et (g2) un catalyseur du groupe du platine.

5. Composition de type émulsion formant une éponge de caoutchouc de silicone selon la revendication 1 ou 2, **caractérisée en ce que** 100 parties en poids de composant (A) et 1 à 50 parties en poids de composant (B) sont incorporés sous la forme d'une base de caoutchouc de silicone liquide comprenant (A) 100 parties en poids d'un diorganopolysiloxane liquide qui possède au moins deux groupes alcényle liés à du silicium dans chaque molécule et (B) 1 à 50 parties en poids d'une charge de silice de renforcement comprenant (b1) une silice fumée et (b2) une silice précipitée dans un rapport pondéral (b1)/(b2) de 0,01/1 à 30/1.

6. Composition de type émulsion formant une éponge de caoutchouc de silicone selon la revendication 5, **caractérisée en ce que** la base de caoutchouc de silicone liquide est préparée en mélangeant une base de caoutchouc de silicone liquide produite par mélange de composant (A) et de silice fumée (b1) avec une base de caoutchouc de silicone produite par mélange du composant (A) et de la silice précipitée (b2)

7. Composition de type émulsion formant une éponge de caoutchouc de silicone selon la revendication 5, **caractérisée en ce que** le composant (C) contient 0,5 à 5 parties en poids de (c) une argile smectique par 100 parties en poids de l'eau.

8. Composition de type émulsion formant une éponge de caoutchouc de silicone selon la revendication 5 ou 7, **caractérisée en ce que** le composant (G) comprend (g1) un organopolysiloxane qui possède au moins deux atomes d'hydrogène liés au silicium dans chaque molécule et (g2) un catalyseur du groupe du platine.

9. Composition de type émulsion formant une éponge de caoutchouc de silicone selon la revendication 1, 2 ou 5, **caractérisée en ce que** (E) l'ester d'acide isononanoïque est incorporé à raison de 1 à 8 parties en poids.

10. Composition de type émulsion formant une éponge de caoutchouc de silicone selon la revendication 1, 2, 5 ou 9, **caractérisée en ce que** (F) l'alcool de Guerbet est incorporé à raison de 0,5 à 8 parties en poids.

11. Procédé de production d'une éponge de caoutchouc de silicone, **caractérisé par** la production d'une éponge de caoutchouc de silicone en chauffant et en durcissant de ce fait une composition de type émulsion formant une éponge de caoutchouc de silicone selon l'une quelconque des revendications 1 à 10 tout en retirant l'eau de celle-ci, ou en chauffant et en durcissant de ce fait une composition de type émulsion formant une éponge de caoutchouc de silicone selon l'une quelconque des revendications 1 à 10 puis en retirant l'eau du produit résultant durci de type caoutchouc de silicone humide.
